# EUROPÄISCHE PATENTANMELDUNG

(11) **EP 1 965 029 A1**
(43) Veröffentlichungstag der Anmeldung: **03.09.2008**
(21) Anmeldenummer: 07004386.4
(22) Anmeldetag: 02.03.2007
(51) Int. Cl.: F01D 11/00, F16J 15/32

(54) **Statische Abdichtung Einlaufgehäuse zu Diffusor mittels Bürstendichtung für Heissgasexpander**

(71) Anmelder: SIEMENS AKTIENGESELLSCHAFT, 80333 München (DE)
(72) Erfinder: Mikulec, Vinko, 47051 Duisburg (DE); Wüller, Martin, 45768 Marl (DE)

(57) **Zusammenfassung**

Die Erfindung betrifft eine Strömungsmaschine, z.B. eine Getriebemaschine (1), mit zumindest einem Einlaufgehäuse (2),
wobei dem Einlaufgehäuse (2) ein Diffusor (7) zugeordnet ist, der mittels eines Dichtsystems (8) zum Einlaufgehäuse (2) abgedichtet ist.

Das Dichtsystem (8) weist eine Bürstendichtung (24) auf, so dass auch bei hohen Eintrittstemperaturen von bis zu 510°C eine betriebssichere Abdichtung des Raumes des Einlaufgehäuses (2) zum Diffusor (7) hin erreichbar ist.

## Beschreibung

Die Erfindung betrifft eine Strömungsmaschine, insbesondere einen Heißgasexpander, der auch als eine Getriebemaschine ausgebildet sein kann, umfassend zumindest ein Einlaufgehäuse, wobei dem Einlaufgehäuse ein Diffusor zugeordnet ist, der mittels eines Dichtsystems zum Einlaufgehäuse abgedichtet ist.

Strömungsmaschinen, insbesondere Heißgasexpander der eingangs genannten Art zeichnen sich durch eine Mehrwellenanordnung mit unterschiedlichen Rotationsgeschwindigkeiten um ein zentrales Antriebsrad aus. Hierdurch wird eine kompakte Einheit für eine mehrstufige Verdichtung/Expansion für eine Vielzahl von Medien, vorzugsweise von gasförmigen Medien zur Verfügung gestellt.

Derartige Getriebemaschinen expandieren das Medium, welches eine Eintrittstemperatur von bis zu 300°C oder in einer bevorzugten Ausführung eine Eintrittstemperatur über 300°C aufweisen kann. Bei einer Medieneintrittstemperatur von mehr als 300°C spricht man auch von so genannten Heißgasexpandern.

Diese Heißgasexpander weisen mindestens ein Einlaufgehäuse auf, in dem der Spiraleinsatz angeordnet ist. Der Spiraleinsatz trägt einen verstellbaren Eintrittsleitapparat, der einen Stellring, Leitschaufeln und Bolzen aufweist, wobei die Bolzen als Drehachse zum Einstellen der Leitschaufeln dienen.

Die Leitschaufeln sind also drehbar an dem Bolzen angeschlagen, wobei die Leitschaufeln gleichzeitig über einen Mitnehmer mit dem Stellring verbunden sind. Wird nun der Stellring in einem gewünschten Winkelbetrag verdreht, bewirken die Mitnehmer eine Zwangsverstellung der Leitschaufeln um den Bolzen, so dass durch die Verstellung der Leitschaufeln eine Beeinflussung der Richtung und/oder der Geschwindigkeit des Mediumstroms zu der Laufschaufel bzw. zum Laufrad bewirkt wird.

Der Spiraleinsatz hat somit zwei Funktionen. Zum einen trägt der Spiraleinsatz den Verstellmechanismus (Stellring usw.), wobei der Spiraleinsatz zum anderen auch den Konturring trägt.

Der Spiraleinsatz mit dem zugeordneten Eintrittsleitapparat und dem Konturring wird außerhalb des Einlaufgehäuses vormontiert und als Einheit in dieses eingesetzt.

Aufgrund der hohen thermischen Belastung, insbesondere bei Heißgasexpandern, wird jedoch beobachtet, dass sich die unterschiedlichen Bauteilkomponenten aufgrund der thermischen Einwirkung ausdehnen bzw. unterschiedlich ausdehnen. Durch die üblicherweise starre Verbindung des Spiraleinsatzes mit den zugeordneten Bauteilen an dem Einlaufgehäuse muss die einzusetzende Einheit daher bei der Montage mit relativ großem radialen Spiel zum Einlaufgehäuse bzw. zum Laufrad ausgeführt werden, um ein Klemmen durch unterschiedliche Temperaturdehnungen zu vermeiden und um eine axiale Bewegungsfreiheit sicherstellen zu können.

Hierdurch ist aber der Konturringspalt zwischen der Konturringfläche und den dazu korrespondierenden Laufschaufelkanten des Laufrades derart groß bemessen, dass der Wirkungsgrad des Heißgasexpanders durch extrem hohe Spaltverluste erheblich herabgesetzt ist. Wirkungsgradverluste können aber auch auftreten, wenn die Spalte zwischen den Leitschaufeln bzw. dem Bolzen (als Drehachse der jeweiligen Leitschaufel) und der zugeordneten Kanalinnenwand zu groß sind.

Weiterhin ist der Diffusor zum Einlaufgehäuse abgedichtet. Hierzu wird bekannter Weise eine Blockdichtung auf Kunststoffbasis eingesetzt, die über eine Nut/Feder-Verbindung mit dem Diffusorende verbunden ist. Die Blockdichtung liegt an einer Stirnseite des Konturrings an. Derartige Dichtsystem auf Kunststoffbasis können aber nur bis zu einem Temperaturbereich der Eintrittstemperatur des Mediums von bis zu 300°C betriebssicher eingesetzt werden, so dass die Blockdichtung bei höheren Eintrittstemperaturen versagt.

Der Erfindung liegt daher die Aufgabe zugrunde, eine Strömungsmaschine der Eingangs genannten Art, insbesondere ein Dichtsystem für einen Heißgasexpander mit einfachen Mitteln dahingehend zu verbessern, dass diese auch bei Eintrittstemperaturen von vorzugsweise bis zu 510°C betriebssicher einsetzbar ist.

Erfindungsgemäß wird die Aufgabe dadurch gelöst, dass das Dichtsystem eine Bürstendichtung aufweist.

Die Bürstendichtung weist einen zentralen Tragring auf, um den feine Drahthäärchen angeordnet sind. Die Drahthäärchen weisen mit ihrem freien Ende jeweils von dem Tragring radial nach außen gerichtet weg. Insgesamt ist die Bürstendichtung aus einem Temperaturbeständigen und korrosionsfesten Material, bevorzugt aus einem metallischen Material gebildet, so dass das Dichtsystem mit der Bürstendichtung vorteilhaft bei Heißgasexpandern mit einer Eintrittstemperatur von bis zu 510°C betrieben werden kann, ohne dass das Dichtsystem bei diesen oder bei höheren Temperaturen versagt. Vorteilhafter Weise ist das Dichtsystem mit der Bürstendichtung derart ausgelegt, dass dieses so flexibel ist, dass es in der Lage ist, das unterschiedliche thermische Wachsen der Komponenten abzufangen.

In bevorzugter Ausgestaltung weist das Dichtsystem ein Trägerelement auf, welches die Bürstendichtung trägt. Das Trägerelement kann auch als Bürstenträger bezeichnet werden.

Zweckmäßiger Weise weist das Dichtsystem an seinem Trägerelement zwei Sicherungselemente auf, zwischen denen die Bürstendichtung angeordnet ist, wobei die Sicherungselemente bevorzugt mit einem radialen Spiel in dem Trägerelement aufgenommen sind. Hierzu sind die Sicherungselemente in Nuten eingesetzt, die in dem Trägerelement eingebracht sind. Im montierten Zustand haben die Sicherungselemente immer Kontakt zum Diffusor. Somit wird vorteilhaft einer blow down Gefahr (Gasdurchschlag durch Umknicken der Bürstenhaare) entgegengewirkt. Damit können aber auch vorteilhaft Wärmedehnungen und Montagetoleranzen aufgefangen werden, wobei sich der Diffusor bei axialen Wärmedehnungen unter der Bürstendichtung axial verschiebt.

In bevorzugter Ausgestaltung ist das Dichtsystem mit seinem Trägerelement an einer Stirnseite des Konturrings befestigt. Die Sicherungselemente, die vorzugsweise als Lamellenringe ausgeführt sind stehen in Kontakt mit dem Diffusor bzw. einer korrespondierenden Gleitfläche. Die Bürstendichtung bzw. deren Drahthäärchen stehen im vormontierten Zustand über die freien Enden der Sicherungselemente über und liegen in der eingestellten Lage an dem Diffusor bzw. einer korrespondierenden Gleitfläche an.

Möglich ist natürlich auch, dass das Dichtsystem mit seinem Trägerelement an dem Diffusor befestigt ist, so dass die Bürstendichtung mit ihren Drahthäärchen an dem Konturring bzw. einer korrespondierenden Gleitfläche anliegt.

Insgesamt wird somit ein Dichtsystem zur Verfügung gestellt, bei welchem die Funktion der Bürstendichtung bei großen Bauteiltoleranzen und großen Wärmedehnungen erhalten bleibt, so dass der Raum des Einlaufgehäuses zum Diffusor bei hohen Temperaturen und korrosiven Bedingungen betriebssicher abgedichtet werden kann.

Weiter vorteilhafte Ausgestaltungen der Erfindung sind in den Unteransprüchen und der folgenden Figurenbeschreibung offenbart.

Es zeigen:
- Fig. 1: einen Querschnitt durch einen beispielhaft dargestellten Heißgasexpander, und
- Fig. 2: ein Dichtsystem aus Figur 1 als Einzelheit.

In den unterschiedlichen Figuren sind gleiche Teile stets mit denselben Bezugszeichen versehen, weswegen diese in der Regel auch nur einmal beschrieben werden.

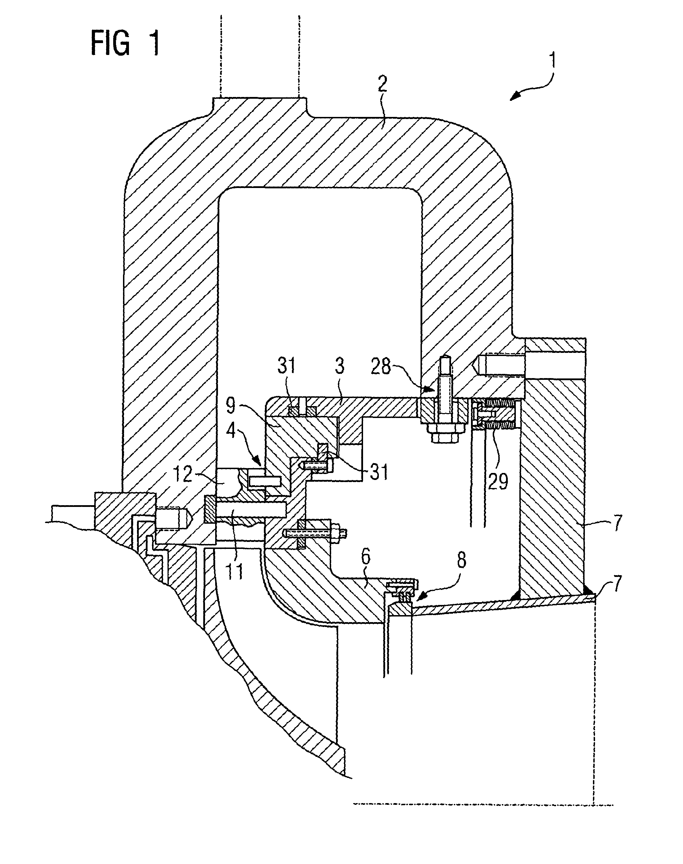

Figur 1 zeigt eine Strömungsmaschine, beispielsweise eine Getriebemaschine, die in dem dargestellten Ausführungsbeispiel als Heißgasexpander 1 mit einer Eintrittstemperatur eines vorzugsweise gasförmigen Mediums von bis zu 510°C ausgeführt ist. Der Heißgasexpander 1 weist mindestens ein Einlaufgehäuse 2 auf, in dem ein Spiraleinsatz 3 angeordnet ist. Dem Spiraleinsatz 3 ist ein Eintrittsleitapparat 4 und ein Konturring 6 zugeordnet. Dem Einlaufgehäuse 2 ist weiterhin ein Diffusor 7 zugeordnet, der mittels eines Dichtsystems 8 zum Einlaufgehäuse 2 abgedichtet ist.

Der Eintrittsleitapparat 4 weist einen Stellring 9, Abstandhalter 11 und Leitschaufeln 12 auf.

Das Dichtsystem 8 weist ein Trägerelement 14 bzw. einen Bürstenträger auf. Das Trägerelement 14 ist an einer Stirnseite 16 des Konturrings 6 befestigt, bevorzugt mit dieser verschraubt. In dem dargestellten Ausführungsbeispiel ist an der Stirnseite 16 ein Fortsatz 17 angeordnet, in dem eine Gewindebohrung eingebracht ist. Das Trägerelement 14 weist eine Durchgangsbohrung zur Aufnahme einer Befestigungsschraube 18 auf, welche in die Gewindebohrung einschraubbar ist. In bevorzugter Ausgestaltung weist das Trägerelement 14 an seiner Dichtseite 19 eine stufenartige Ausgestaltung auf, die an eine entsprechende Gegenstufe 21 des Konturrings 6 bzw. des Fortsatzes 17 anliegt (Zentrierung).

In die Dichtseite 19 sind zwei Nuten 22 eingebracht, in welche jeweils ein Sicherungselement 23 mit radialem Spiel aufgenommen ist.

Zwischen den Sicherungselementen 23, welche vorzugsweise als Lamellenringe ausgeführt sind, ist eine Bürstendichtung 24 angeordnet.
Die Bürstendichtung 24 ist in bevorzugter Ausgestaltung aus einem zentralen Ring gebildet, an dem feine Drahthäärchen angeordnet sind, welche in vormontierter Lage mit ihren freien Enden in radialer Richtung über die freien Enden der Sicherungselemente 23 bzw. der Lamellen überstehen.

In bevorzugter Ausführung ist dem Diffusor 7 bzw. dessen zum Konturring 6 weisenden Ende eine Endplatte 26 zugeordnet, die hinreichend mit dem Diffusor 7 verbunden, vorzugsweise mittels Kehlnähten verschweißt ist.

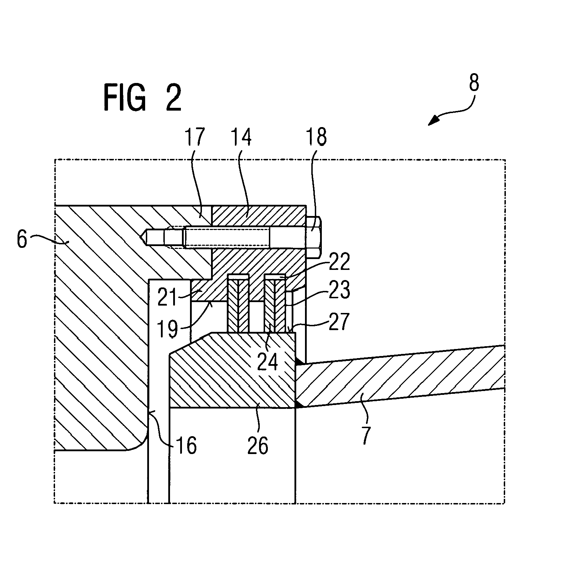

In eingestellter Position des Dichtsystems 8 (Figur 2) stehen die Sicherungselemente 23 mit ihren freien Enden in Kontakt mit einer zur Dichtseite 19 des Trägerelementes 14 korrespondierenden Dichtfläche 27 des Diffusors 7 bzw. der daran angeordneten Endplatte 26. Die Bürstendichtung 24 bzw. deren Drahthäärchen liegen an der Dichtfläche 27 an.

In dem in Figur 1 dargestellten Ausführungsbeispiel ist dem Spiraleinsatz 3 zudem ein Einstellsystem 28 zur radialen Einstellbarkeit und ein Spannsystem 29 zur Minimierung axialer Spalte zugeordnet. Zudem ist der Stellring 9 über Gleitelemente 31 radial und axial in dem Spiraleinsatz 3 geführt.

Natürlich soll die Erfindung nicht auf das beispielhaft genannte Ausführungsbeispiel der Getriebemaschine beschränkt sein. Vielmehr kann das erfindungsgemäße Dichtsystem unter Verwendung der Bürstendichtung sinnvoller Weise bei statischen Abdichtaufgaben eingesetzt werden, bei denen ein thermisches Wachsen bzw. unterschiedliches thermisches Wachsen einzelner Bauteilkomponenten zu erwarten ist.

## Patentansprüche

1. Strömungsmaschine,
insbesondere Heißgasexpander,
mit zumindest einem Einlaufgehäuse (2),
wobei dem Einlaufgehäuse (2) ein Diffusor zugeordnet ist, der mittels eines Dichtsystems (8) zum Einlaufgehäuse (2) abgedichtet ist,
**dadurch gekennzeichnet, dass**
das Dichtsystem (8) eine Bürstendichtung (24) aufweist.

2. Strömungsmaschine nach Anspruch 1,
**dadurch gekennzeichnet, dass**
das Dichtsystem (8) ein Trägerelement (14) aufweist.

3. Strömungsmaschine nach Anspruch 1 oder 2,
**dadurch gekennzeichnet, dass**
das Dichtsystem (8) an seinem Trägerelement (14) Sicherungselemente (23) aufweist, zwischen denen die Bürstendichtung (24) angeordnet ist.

4. Strömungsmaschine nach Anspruch 3,
**dadurch gekennzeichnet, dass**
die Sicherungselemente (23) mit radialem Spiel in dem Trägerelement (14) aufgenommen sind.

5. Strömungsmaschine nach einem der vorhergehenden Ansprüche,
**dadurch gekennzeichnet, dass**
das Dichtsystem (8) mit seinem Trägerelement (14) an einer Stirnseite (16) des Konturrings (6) befestigt ist,
so dass die Bürstendichtung (24) mit ihren Drahthäärchen an dem Diffusor (7) anliegt.

6. Strömungsmaschine nach einem der vorhergehenden Ansprüche,
**dadurch gekennzeichnet, dass**
das Dichtsystem (8) mit seinem Trägerelement (14) an dem Diffusor (7) befestigt ist,
so dass die Bürstendichtung (24) mit ihren Drahthäärchen an dem Konturring (6) anliegt.
